# EUROPEAN PATENT APPLICATION

(11) **EP 4 687 070 A1**
(43) Date of publication of application: **04.02.2026**
(21) Application number: 24191563.6
(22) Date of filing: 29.07.2024
(51) Int. Cl.: G06N 3/045

(54) **OPTIMIZING MIXTURE OF EXPERTS, MOE, INTEGRATION INTO NEURAL NETWORK ARCHITECTURES**

(71) Applicant: Robert Bosch GmbH, 70442 Stuttgart (DE)
(72) Inventor: Staffler, Benedikt Sebastian, 72072 Tuebingen (DE); Reiss, Attila, 71277 Rutesheim (DE); Schott, Lukas, 70178 Stuttgart (DE); Rapp, Martin, 73728 Esslingen Am Neckar (DE); Saranrittichai, Piyapat, 71229 Leonberg (DE)

(57) **Abstract**

A method (100) for determining, in a neural network (1) that comprises N layers (1a-1d) and is configured for classification and/or regression of sensor data (2), one or more optimal layers (1*) for the integration of Mixture of Experts, MoE, functionality, said MoE functionality comprising a plurality of M distinct processing blocks (4a-4d) and a router block (3) that routes each input (I) to one or more processing blocks (4a-4d) for processing, the method (100) comprising the steps of:
• constructing (110) candidate versions (1A, 1B) of the neural network (1), wherein, in each candidate version (1A, 1B), one or more layers (1a-1d) are replaced with surrogate layers (1a'-1d'), wherein:
∘ each surrogate layer (1a'-1d') is computationally cheaper to train than a respective MoE layer with full MoE functionality, while
∘ the performance of the candidate neural network (1A, 1B) with the surrogate layer (1a'-1d') is commensurate with the performance that the neural network (1) would have with the MoE layer in the place of the surrogate layer (1a'-1d');

• training (120), using training examples (2a) of sensor data, each candidate version (1A, 1B) of the neural network (1);
• determining (130), using test and/or validation samples (2b) of sensor data for which respective ground truth outputs (5b) of the neural network (1) are known, the accuracy (6) with which the trained candidate version (1A*, 1 B*) of the neural network (1) reproduces the ground truth outputs (5b); and
• determining (140) the layers (1a-1d) that are replaced with surrogate layers in a candidate version (1A, 1B) of the neural network (1) with a best accuracy (6) as optimal layers (1*) for the integration of MoE functionality.

## Description

The present invention relates to neural networks that comprise, in at least one layer, Mixture of Experts, MoE, functionality with processing blocks being chosen for use depending on the input.

### Background

When processing sensor data with neural networks, these sensor data may relate to a plethora of different situations. It may be difficult to construct and train one single monolithic neural network architecture that is appropriate for all situations. In particular, the monolithic architecture may be so large that its use during inference is computationally expensive.

This is what the Mixture of Experts, MoE, technique is for. This technique allows deep learning models to have a larger number of parameters without compromising inference time. A MoE layer comprises a router block and a set of individual processing blocks that are also known as "expert networks". When an input enters a MoE layer, the router block decides which processing blocks get this input for processing. In this manner, only those processing blocks that are appropriate for this input are activated. A forward pass through each individual processing block may be much faster than a forward pass through a monolithic network comprising the functionality of all processing blocks.

There are applications in the prior art where MoE functionality is integrated into all layers of the neural network. But there are also applications where MoE layers are integrated only in predetermined parts of the network.

### Disclosure of the invention

The invention provides a method for determining one or more optimal layers for the integration of Mixture of Experts, MoE, functionality into a neural network that comprises N layers and is configured for classification and/or regression of sensor data. The MoE functionality comprising a plurality of M distinct processing blocks and a router block that routes each input to one or more processing blocks for processing. That is, when an input arrives, the router block determines which processing blocks are appropriate for the processing of this input, and then the input is processed by these determined processing blocks.

In particular, the sensor data may comprise images of any sort (such as still images, video images, thermal images, radar images, lidar images or ultrasound images). The classification may comprise assigning, to the image, classification scores with respect to one or more classes, based on low-level attributes of the image, such as pixels, voxels or other constituents of the image, or basic features such as edges. In particular, the classes may relate to the presence of particular objects, such as persons, vehicles, obstacles, traffic signs or other traffic-relevant objects, in images representing traffic scenes.

The sensor data, and in particular the output of the neural network that is being modified according to the present method may, for example, be used for automatically determining the operating state of a technical system, or for actuating the technical system. For example, the sensor data, and/or the output, may be used to classify the operating state (in a simple example: into normal and abnormal), or to derive a quantity of interest that is relevant to the operation of the technical system but not measured directly. That is, in particular, the neural network may be configured to derive, from the sensor data, a quantity of interest that is of a dimension different from that of the sensor data. But in another example, the output may be a de-noised version of the sensor data, and thus be of the same dimension as the sensor data.

Actuation of the technical system may happen in any suitable manner. For example, based on the output of the neural network, an actuation signal may be computed and supplied to the technical system as input. For example, the actuation signal may be applied to an actuator that directly changes the physical behavior of the technical system, or it may be applied as a set-point to a controller of the technical system that is configured to keep a particular property of the technical system at or near a set-point value.

Examples of technical systems where, when the neural network that is being modified according to the present method is supplied with sensor data, the output of this neural network may be applied as describe above, include vehicles, vehicle assistance systems, robots, quality inspection systems, surveillance systems, medical imaging systems, but also industrial plants executing an industrial process.

In the course of the method, candidate versions of the neural network are constructed. These are modified neural network architectures derived from the original architecture with N layers. In each candidate version, one or more layers are replaced with surrogate layers. These surrogate layers some sort of mimic the integration of MoE functionality into the respective layer for the purpose of assessing whether it is really advantageous to integrate MoE functionality into this layer, rather than into another one. Therefore, each surrogate layer is chosen to be
- computationally cheaper to train than a respective MoE layer with full MoE functionality, while at the same time
- the performance of the candidate neural network with the surrogate layer is commensurate with the performance that the neural network would have with the MoE layer in the place of the surrogate layer.

That is, if the surrogate layer is present, the performance of the candidate neural network will be an approximation of the performance of the neural network with MoE functionality in the place of the surrogate layer. But the measuring of this performance will be a lot quicker than measuring the performance of the neural network with MoE functionality in the place of the surrogate layer.

Consequently, using training examples of sensor data, each candidate version of the neural network is trained. The training examples may or may not be labelled with corresponding ground truth that the neural network should reproduce. In particular, the set of training examples may also comprise a mixture of labelled and unlabelled training examples.

Using test and/or validation samples of sensor data for which respective ground truth outputs of the neural network are known, the accuracy with which the trained candidate version of the neural network reproduces the ground truth outputs is then determined according to any suitable metric. For example, the metric may measure how good the ground truth outputs are reproduced on the average. But alternatively or in combination to this, the metric may also measure how good the ground truth outputs are reproduced in the best and/or worst cases in the set of training examples.

The layers that are replaced with surrogate layers in a candidate version of the neural network with a best accuracy are determined as optimal layers for the integration of MoE functionality. In a simple example, let the neural network comprises five layers. Five candidate versions of the neural network are set up with exactly one layer replaced by a surrogate layer. That is, the first candidate version has the first layer replaced with a surrogate layer, the second candidate version has the second layer replaced with a surrogate layer, and so on. After training, these five candidate versions achieve test accuracies of 0.8, 0.82, 0.9, 0.88 and 0.85, respectively. In this case, the third candidate version that has the third layer replaced with a surrogate layer achieves the best accuracy of 0.9, closely followed by the fourth candidate version that has the fourth layer replaced with a surrogate layer and achieves the second-best accuracy of 0.88. This indicates that it is most advantageous to integrate MoE functionality into the third layer and/or the fourth layer of the neural network.

Finding out in this manner where to best put the MoE functionality is advantageous because the straight-forward way of putting this into each and every layer comes at a price: The complexity of the neural network architecture increases, and it becomes more expensive to train. In particular, on top of the processing blocks having to learn how to process the inputs assigned to them, the router block has to learn how to make, for each input, a good choice of one or more processing blocks. Therefore, training candidate models with MoE layers for N times is not cheap. Training MoEs require larger computational resources. Additionally, MoE hyperparameters need to be tuned extensively in order to make the training stable. The proposed method allows to focus this additional effort onto layers where a reasonable return on this complexity and computation investment can be expected. The full training of the neural network with MoE functionality then needs to be done only once after it has been decided, using the outcome of the present method, where exactly to put it.

Figuratively speaking, the fast determining of the optimal layers for integrating MoE functionality corresponds to a geological survey with a seismic vibrator for detecting where oil or another sought commodity is present, the optimal layers correspond to the optimal spot for digging or drilling, and the training of the neural network with MoE functionality integrated into these optimal layers corresponds to the actual digging or drilling to finally get the sought commodity.

In this manner, the use of MoE functionality is unlocked for applications where it would previously have been too cumbersome and/or too expensive, thereby enriching these applications with the known benefits of using MoE functionality. In particular, each of the rather small individual processing blocks needs only relatively few training examples, so the total amount of training examples required to train the neural network is less than the amount that would be needed to train a monolithic neural network towards the same performance. Also, because only one or a few out of many processing blocks are active at any one time during inference, lesser processing resources and lesser power consumption are required. That is, the hardware platform only needs to be equipped with hardware resources necessary to run a few processing blocks, rather than a large monolithic network. In particular, in embedded applications such as the evaluation of sensor data from the monitoring of the environment of a vehicle, hardware resources and power available on board the vehicle are limited.

In the technical applications presented above, the main benefit of the present method is that, by virtue of making MoE available where it was previously not practically available, the output of the neural network has a better accuracy. This means that the probability that the output, and the resulting action taken on or by the technical system, is appropriate given the situation represented by the sensor data, is improved.

In a particularly advantageous embodiment, the surrogate layers are chosen such that the performance of the candidate neural network with the surrogate layer is an upper bound of the performance that the neural network would have with the MoE layer in the place of the surrogate layer. This upper-bound performance represents an ideal case where all processing blocks ("experts") convene to debate on the optimal output. The real case, where only one or a few processing blocks are active at any one time, cannot have a better performance than this. Figuratively speaking, rather than drawing a complex contour around the performance of the neural network with MoE functionality in a particular layer with many twists and turns along this contour that are very complex to describe, one just draws a bounding box around this performance. This requires just the definition of two corner points.

In particular, the output that at least one surrogate layer produces from an input may be aggregated from processing results produced by multiple processing blocks from this input. In this aggregating, more results from more processing blocks may be used than will be used during inference of the real network.

For example, the aggregating may be performed by computing an average, a median, a maximum or a minimum of the results produced by the multiple processing blocks. Which mode of aggregation is most appropriate depends on the concrete application at hand.

In a further particularly advantageous embodiment, the output that at least one surrogate layer produces from an input is chosen from processing results produced by multiple processing blocks from this input. That is, only one such processing result is used further. For example, this may be used for a more fine-grained analysis that also gives an indication which processing blocks are most appropriate to use. Also, the estimate of the accuracy becomes more accurate because the case where only one processing block "expert" at a time is active is a lot closer to the reality during inference than the case where all available processing block "experts" are active.

For example, a processing result that is optimal with respect to a given criterion is chosen as the output of the at least one surrogate layer. For example, the criterion may comprise that a confidence score or other score of the processing result is maximal, or that an uncertainty of this processing result is minimal.

In a further particularly advantageous embodiment, at least two candidate versions of the neural network are constructed with different processing results from the multiple processing blocks being chosen as outputs in a same surrogate layer. For example, if there are M different processing block "experts", in the first candidate version of the neural network, a particular layer may be replaced with a surrogate layer that uses the output of a first processing block "expert". A second candidate version of the neural network may have a surrogate layer in the same place, and this surrogate layer may use the output of the second processing block "expert", and so on. Thus, examination whether one layer is suitable for integrating MoE functionality may decompose into examination of M candidate versions of the neural network: at least M candidate versions of the neural network may be constructed to use the results from processing blocks 1,...,M as outputs of one and the same surrogate layer.

Candidate versions of the neural network may also very well comprise combinations of surrogate layers that use aggregated outputs from multiple processing blocks on the one hand, and surrogate layers that use chosen individual outputs from processing blocks on the other hand. In some places the one may be better, and in some places the other may be better for approximating the performance of the neural network with MoE functionality.

In a further particularly advantageous embodiment, the MoE functionality is integrated into the one or more layers that have been determined as optimal. This produces a MoE-enabled neural network. This MoE-enabled neural network is then trained with training examples of sensor data. The training results in a trained MoE-enabled neural network. As discussed above, because the determining of the optimal layers where to integrate MoE functionality can now be done based on approximation rather than on a full training of the MoE, the final result, namely a neural network that has the MoE functionality in an optimal place and that has been trained, can be obtained quicker.

In a further particularly advantageous embodiment, the training of the MoE-enabled neural network comprises training the assignment, by the router block, of training examples to individual processing blocks corresponding to different groups to which the training examples belong. In this manner, each input is handled by the processing block "experts" that are best suited for it. This is in some way analogous to the in-processing of patients in a hospital emergency room: First, a cursory screening is performed by the "router block" to diagnose the kind of ailment that the patient has. Then, the patient is transferred to the department that is competent for this particular ailment.

The different groups that inputs are assigned to, may, for example, represent
- different kinds of objects that are present in an area that is monitored by at least one sensor producing the sensor data; and/or
- different kinds of disturbances present in samples of sensor data.

For example, in a use case where the neural network is used to analyze sensor data from the environment of a vehicle or robot, a first group may represent traffic signs, a second group may represent other traffic participants, a third group may represent road markings, and a fourth group may represent other obstacles, such as vegetation. If different processing blocks are competent for handling these kinds of objects, the processing may be modularized in that each processing block may be specifically trained for one particular group.

But the division of the inputs into groups is not required to be human-understandable, like the division into different kinds of objects. For example, different kinds of disturbances (such as noise) that are present in samples of sensor data may not be discernible by humans. It is sufficient that the router block can learn how to distinguish them.

Once the MoE-enabled neural network has been trained, samples of sensor data may be provided to it. From the output that the the trained MoE-enabled neural network has produced from the samples of sensor data, an actuation signal may be computed. A vehicle, a driving assistance system, a robot, a quality inspection system, a surveillance system, and/or a medical imaging system, may then be actuated with the actuation signal. In this manner, the probability that the reaction performed by the respective actuated technical system in response to the actuation signal is appropriate in the situation characterized by the sensor data is improved by virtue of the increased accuracy of the output of the trained MoE-enabled neural network.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

### Description of the Figures

In the following, the invention is illustrated using Figures without any intention to limit the scope of the invention. The Figures show:
Figure 1 Exemplary embodiment of the method 100 for determining one or more optimal layers 1* for the integration of Mixture of Experts, MoE, functionality, into a given neural network 1;
Figure 2 Illustration of the estimating of the performance of an MoE layer by means of a surrogate layer 1a'-1d';
Figure 3 Illustration of the finally obtained MoE-enabled neural network 1#.

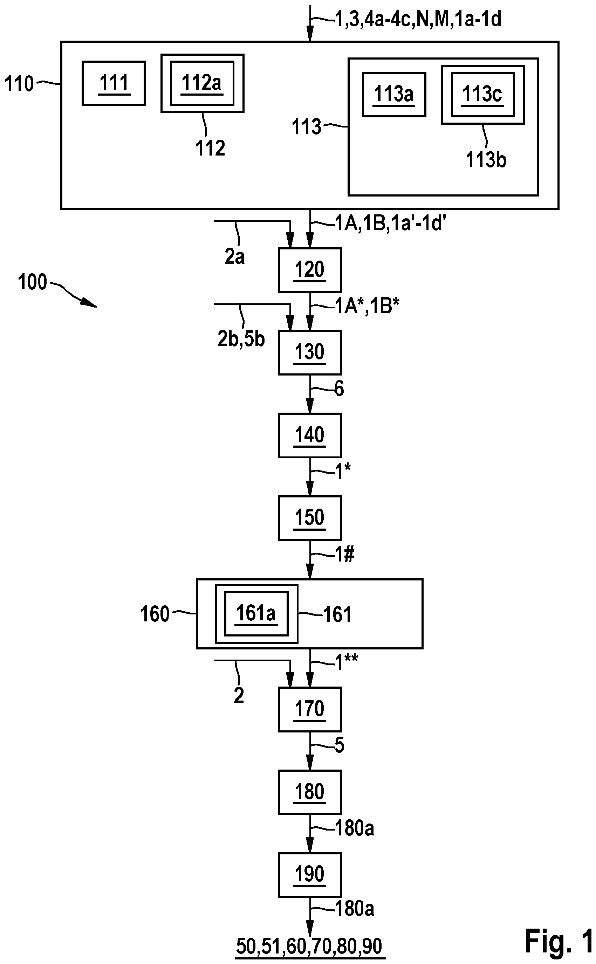

Figure 1 is a schematic flow chart of an embodiment of the method 100 for determining one or more optimal layers 1* for the integration of Mixture of Experts, MoE, functionality into a neural network 1. The neural network 1 comprises N layers 1a-1d and is configured for classification and/or regression of sensor data 2. The MoE functionality comprises a plurality of M distinct processing blocks 4a-4d and a router block 3 that routes each input I to one or more processing blocks 4a-4d for processing.

In step 110, candidate versions 1A, 1B of the neural network 1 are constructed. In each candidate version 1A, 1B, one or more layers (1a-1d) are replaced with surrogate layers 1a'-1d'. Each such surrogate layer 1 a'-1 d' is computationally cheaper to train than a respective MoE layer with full MoE functionality. But at the same time, the performance of the candidate neural network 1A, 1B with the surrogate layer 1a'-1d' is commensurate with the performance that the neural network 1 would have with the MoE layer in the place of the surrogate layer 1a'-1d'.

According to block 111, the surrogate layers 1a'-1d' may be chosen such that the performance of the candidate neural network 1A, 1B with the surrogate layer 1a'-1d' is an upper bound of the performance that the neural network would have with the MoE layer in the place of the surrogate layer.

According to block 112, wherein the output O that at least one surrogate layer 1a'-1d' produces from an input I may be aggregated from processing results produced by multiple processing blocks 4a-4d from this input I.

In particular, according to block 112a, the aggregating may be performed by computing an average, a median, a maximum or a minimum of the results produced by the multiple processing blocks 4a-4d.

According to block 113, the output O that at least one surrogate layer 1a'-1d' produces from an input I may be chosen from processing results produced by multiple processing blocks 4a-4d from this input I.

According to block 113a, a processing result that is optimal with respect to a given criterion may be chosen as the output O of the at least one surrogate layer 1a'-1d'.

According to block 113b, at least two candidate versions 1A, 1B of the neural network 1 may be constructed 113b, and in each such candidate version 1A, 1B, different processing results from the multiple processing blocks 4a-4d may be chosen as outputs O in a same surrogate layer 1a'-1d'. In particular, according to block 113c, at least M candidate versions 1A, 1B of the neural network 1 may be constructed to use the results from processing blocks 1,...,M, 4a-4c, as outputs O of one and the same surrogate layer 1a'-1d'.

In step 120, using training examples 2a of sensor data, each candidate version 1A, 1B of the neural network 1 is trained. The trained state of each candidate version 1A, 1B is labelled with the reference sign 1A*, 1B*, respectively.

In step 130, using test and/or validation samples 2b of sensor data for which respective ground truth outputs 5b of the neural network 1 are known, the accuracy 6 with which the trained candidate version 1A*, 1 B* of the neural network 1 reproduces the ground truth outputs 5b may be determined. That is, the test and/or validation samples 2b may be fed into the trained candidate version 1A*, 1 B*, and the outputs 5 produced by the trained candidate version 1A*, 1B* may then be compared to the ground truth outputs 5b to assess the accuracy 6.

In step 140, the layers 1a-1d that are replaced with surrogate layers in a candidate version 1A, 1B of the neural network 1 with a best accuracy 6 may be determined as optimal layers 1* for the integration of MoE functionality. That is, by virtue of the trained candidate version 1A*, 1B* of the neural network 1 achieving a good accuracy 6, the layers that are surrogate layers 1a'-1d' in this trained candidate version 1A*, 1B* are deemed to be optimal layers 1* for integrating MoE functionality.

In the example shown in Figure 1, in step 150, this determined optimum is put into practice by actually integrating the MoE functionality into the one or more layers 1* of the neural network 1 that have been determined as optimal. This augments the original neural network 1 to a MoE-enabled neural network 1#.

In step 160, the MoE-enabled neural network 1# is trained with training examples 2a of sensor data. This produces a trained MoE-enabled neural network 1**.

According to block 161, the training of the MoE-enabled neural network 1# may comprise training the assignment, by the router block 3, of training examples 2a to individual processing blocks 4a-4d corresponding to different groups to which the training examples belong. In particular, according to block 161a, such different groups may represent
- different kinds of objects that are present in an area that is monitored by at least one sensor producing the sensor data (2); and/or
- different kinds of disturbances present in samples of sensor data (2).

In the example shown in Figure 1, in step 170, samples 2 of sensor data are provided to the trained MoE-enabled neural network 1**. From the output 5 that the trained MoE-enabled neural network 1** has produced from the samples 2 of sensor data, an actuation signal 180a is computed. A vehicle 50, a driving assistance system 51, a robot 60, a quality inspection system 70, a surveillance system 80, and/or a medical imaging system 90, is then actuated with the actuation signal 180a in step 190.

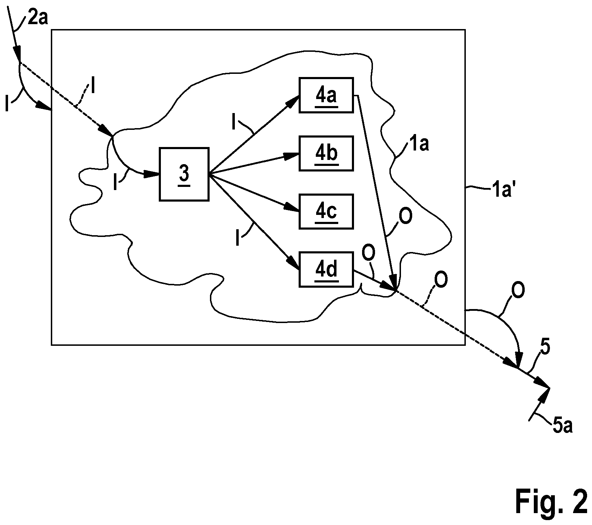

Figure 2 illustrates how the use of a surrogate layer 1a' may save time when assessing whether the integrating of MoE functionality into a layer 1a is more advantageous than integrating this MoE functionality into other layers 1b-1d.

If MoE functionality is integrated into the layer 1a, an input I to this layer 1a in the course of the processing of a training sample 2a travels through the router block 3 and then through any individual processing blocks (here: 4a and 4d) that, according to the output of the router block 3, shall be used. This means that the whole MoE processing chain inside the MoE layer, including the decision process made by the router block 3, needs to be trained. This training is rather complex, as it is symbolized by the complex contour of the boundary around layer 1a.

By introducing a surrogate layer 1a', this complexity is abstracted away. In the example shown in Figure 2, the performance of the surrogate layer 1a' is an upper bound of the performance of the layer 1a with integrated MoE functionality. That is, the surrogate layer 1a' serves as some sort of "bounding box" for the performance of the layer 1a with integrated MoE functionality. Using the "bounding box", this performance will certainly be overestimated, but in return for this, the training of the candidate version 1A, 1B of the neural network 1 with this surrogate layer 1a', and the subsequent measuring of the accuracy 6 on test and/or validation samples 2b, is made a lot faster. In particular, it suffices to consider the outputs of individual processing blocks 4a-4d. The complexity of bringing them together by means of the router block 3 may be neglected when considering only the upper bound of the performance.

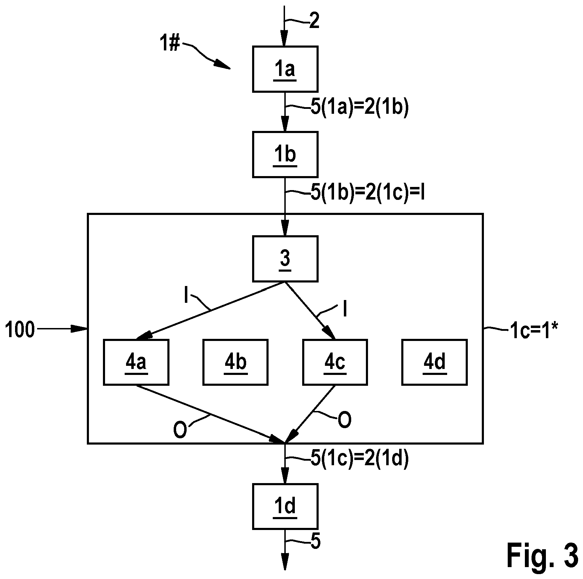

Figure 3 illustrates a version 1# of a neural network 1 that has been augmented with MoE functionality in an optimal layer 1*, according to the present method 100. In the example shown in Figure 3, the neural network 1 consists of four layers 1a-1d. The first layer 1a receives the input sensor data 2. The output 5(1a) of the first layer 1a is fed as input 2(1b) to the second layer 1b. The output 5(1b) of the second layer 1b is fed as input 2(1c) to the third layer 1c. The output 5(1c) of the third layer 1c is fed as input 2(1d) to the fourth and last layer 1d. The output of the fourth and last layer 1d is the output 5 of the neural network 1 as a whole.

In the example shown in Figure 3, it has been found out in the course of the method 100 presented above that the layer 1c is an optimal layer 1* for the integration of MoE functionality. Consequently, in this layer 1c, MoE functionality has now been integrated. That is, the input I to this layer is now first processed by the router block 3. The router block 3 decides to which of the individual processing block "experts" 4a-4c the input I should be provided. In the example shown in Figure 3, these are the processing blocks 4a and 4c. These blocks 4a and 4c contribute to the output O of the layer 1c.

## Claims

1. A method (100) for determining, in a neural network (1) that comprises N layers (1a-1d) and is configured for classification and/or regression of sensor data (2), one or more optimal layers (1*) for the integration of Mixture of Experts, MoE, functionality, said MoE functionality comprising a plurality of M distinct processing blocks (4a-4d) and a router block (3) that routes each input (I) to one or more processing blocks (4a-4d) for processing, the method (100) comprising the steps of:
• constructing (110) candidate versions (1A, 1B) of the neural network (1), wherein, in each candidate version (1A, 1B), one or more layers (1a-1d) are replaced with surrogate layers (1a'-1d'), wherein:
∘ each surrogate layer (1a'-1d') is computationally cheaper to train than a respective MoE layer with full MoE functionality, while
∘ the performance of the candidate neural network (1A, 1B) with the surrogate layer (1a'-1d') is commensurate with the performance that the neural network (1) would have with the MoE layer in the place of the surrogate layer (1a'-1d');
• training (120), using training examples (2a) of sensor data, each candidate version (1A, 1B) of the neural network (1);
• determining (130), using test and/or validation samples (2b) of sensor data for which respective ground truth outputs (5b) of the neural network (1) are known, the accuracy (6) with which the trained candidate version (1A*, 1B*) of the neural network (1) reproduces the ground truth outputs (5b); and
• determining (140) the layers (1a-1d) that are replaced with surrogate layers in a candidate version (1A, 1B) of the neural network (1) with a best accuracy (6) as optimal layers (1*) for the integration of MoE functionality.

2. The method (100) of claim 1, wherein the surrogate layers (1a'-1d') are chosen (111) such that the performance of the candidate neural network (1A, 1 B) with the surrogate layer (1a'-1d') is an upper bound of the performance that the neural network would have with the MoE layer in the place of the surrogate layer.

3. The method (100) of any one of claims 1 to 2, wherein the output (O) that at least one surrogate layer (1a'-1d') produces from an input (I) is aggregated (112) from processing results produced by multiple processing blocks (4a-4d) from this input (I).

4. The method (100) of claim 3, wherein the aggregating is performed (112a) by computing an average, a median, a maximum or a minimum of the results produced by the multiple processing blocks (4a-4d).

5. The method (100) of any one of claims 1 to 4, wherein the output (O) that at least one surrogate layer (1a'-1d') produces from an input (I) is chosen (113) from processing results produced by multiple processing blocks (4a-4d) from this input (I).

6. The method (100) of claim 5, wherein a processing result that is optimal with respect to a given criterion is chosen (113a) as the output (O) of the at least one surrogate layer (1a'-1d').

7. The method (100) of any one of claims 5 or 6, wherein at least two candidate versions (1A, 1B) of the neural network (1) are constructed (113b) with different processing results from the multiple processing blocks (4a-4d) being chosen as outputs (O) in a same surrogate layer (1a'-1d').

8. The method (100) of claim 7, wherein at least M candidate versions (1A, 1B) of the neural network (1) are constructed (113c) to use the results from processing blocks 1,...,M (4a-4c) as outputs (O) of one and the same surrogate layer (1a'-1d').

9. The method (100) of any one of claims 1 to 8, further comprising:
• integrating (150) the MoE functionality into the one or more layers (1*) that have been determined as optimal, thereby obtaining a MoE-enabled neural network (1#); and
• training (160) the MoE-enabled neural network (1#) with training examples (2a) of sensor data, thereby obtaining a trained MoE-enabled neural network (1 **).

10. The method (100) of claim 9, wherein the training of the MoE-enabled neural network (1#) comprises (161) training the assignment, by the router block (3), of training examples (2a) to individual processing blocks (4a-4d) corresponding to different groups to which the training examples (2a) belong.

11. The method (100) of claim 10, wherein the different groups represent (161a)
• different kinds of objects that are present in an area that is monitored by at least one sensor producing the sensor data (2); and/or
• different kinds of disturbances present in samples of sensor data (2).

12. The method (100) of any one of claims 9 to 11, further comprising:
• providing (170) samples (2) of sensor data to the trained MoE-enabled neural network (1**);
• computing (180), from the output (5) that the trained MoE-enabled neural network (1**) has produced from the samples (2) of sensor data, an actuation signal (180a); and
• actuating (190) a vehicle (50), a driving assistance system (51), a robot (60), a quality inspection system (70), a surveillance system (80), and/or a medical imaging system (90), with the actuation signal (180a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.
